# FASCICULE DE BREVET EUROPEEN

(11) **EP 0 965 071 B1**
(45) Date de publication et mention de la délivrance du brevet: **24.11.2004**
(21) Numéro de dépôt: 97950349.7
(22) Date de dépôt: 22.12.1997
(51) Int. Cl.: G04B 47/04, A44C 17/02

(54) **ARTICLE COMPORTANT AU MOINS UN ELEMENT DECORATIF MOBILE**
ARTIKEL MIT MINDESTENS EINEM BEWEGLICHEN ZIERELEMENT
ARTICLE COMPRISING AT LEAST A MOBILE DECORATIVE ELEMENT

(30) Priorité: 23.12.1996 WO PCT/IB96/01464; 18.03.1997 FR 9703505
(43) Date de publication de la demande: 22.12.1999
(73) Titulaire: Chopard International S.A., 1197 Prangins (CH)
(72) Inventeur: RUCHONNET, Jean-François, F-74140 Machilly (FR)
(74) Mandataire: Cronin, Brian Harold John
(86) Numéro de dépôt international: PCT/IB1997/001592
(87) Numéro de publication internationale: WO 1998/028668

(56) Documents cités:
- EP-A- 0 308 243
- CH-A- 609 517
- CH-A- 680 893
- GB-A- 2 181 939
- GB-A- 2 225 458
- US-A- 4 187 697
- US-A- 5 119 350

## Description

La présente invention se rapporte à des articles comportant des éléments décoratifs mobiles, y-compris des articles de bijouterie à des fins purement décoratives tels que des bagues et pendentifs, ainsi que des articles utilitaires décorés par des éléments décoratifs mobiles, notamment des montres, des montures de lunettes, ou des articles de maroquinerie de luxe.

L'invention se rapporte en particulier à un article notamment de joaillerie comprenant un logement délimité par deux parois dont les faces internes sont parallèles l'une à l'autre, l'une au moins de ces parois ,visible de l'extérieur, étant transparente, ce logement renfermant au moins un élément décoratif mobile comportant un axe de révolution et deux surfaces de guidage adjacentes respectivement auxdites faces internes et permettant audit élément décoratif mobile de se déplacer librement en translation et en rotation autour dudit axe de révolution à l'intérieur dudit logement

Une montre de ce type a déjà été décrite dans le brevet suisse CH-G-609 517. Les éléments décoratifs mobiles, notamment des diamants, sont montés dans des supports en forme de petites douilles cylindriques dont la face externe du fond est convexe. Cette forme convexe a été choisie afin de réduire les forces de frottement, améliorant la mobilité du support et donc celle de l'élément décoratif mobile.

Ce type d'élément décoratif a déjà rencontré un très grand succès pour les montres, ainsi que pour d'autres articles de joaillerie, tels que des bagues et des pendentifs, et des lunettes.

La forme convexe du fond du support de l'élément décoratif mobile a un effet sur les mouvements communiqués au support, par exemple, consécutivement à l'inclinaison des surfaces parallèles et rigoureusement plates du logement entre lesquelles ce support est guidé pour se déplacer selon un mouvement de translation. En effet, grâce à cette convexité de la face externe du fond du support coopérant avec les surfaces plates des parois du logement, on a constaté que le mouvement de translation de celui-ci est accompagné d'une certaine rotation de ce support sur lui-même.

Ce mouvement de rotation présente, du point de vue décoratif, un intérêt évident. En effet, si le mouvement de translation aléatoire confère un attrait indéniable, la rotation de l'élément décoratif mobile sur lui-même donne, avec un diamant en particulier, un effet de scintillement extrêmement intéressant puisqu'il met en valeur l'effet de scintillement donné au diamant par ses facettes multiples.

Le but principal de la présente invention est d'augmenter, de manière sensible, l'effet de scintillement des diamants en tant qu'éléments décoratifs mobiles, en augmentant l'effet de rotation de ces éléments décoratifs mobiles sur eux-mêmes.

A cet effet, la présente invention a pour objet un article notamment de joaillerie du type susmentionné, caractérisé par le fait que lesdites faces internes des deux parois du logement sont bombées selon au moins un rayon de courbure.

De manière tout à fait inattendue et surprenante, on a pu constater qu'un léger bombage des faces internes du logement entre lesquelles l'élément décoratif mobile est guidé permet d'augmenter de manière spectaculaire la vitesse de rotation sur eux-mêmes de ces éléments décoratifs mobiles.

On peut certes expliquer pourquoi les petites douilles à fonds convexes des éléments décoratifs mobiles tournent lorsqu'elles se déplacent en translation. En effet, pour se déplacer, un certain jeu est nécessaire entre les surfaces de guidage des éléments décoratifs mobiles et les parois parallèles du logement. Comme le fond convexe de la douille portant l'élément décoratif mobile est en contact avec la face adjacente du logement, il ne touche cette face qu'en son centre. Au contraire, sa surface de guidage avec la surface supérieure du logement est constituée par le bord annulaire de la douille portant l'élément décoratif mobile de sorte que seule une portion de sa périphérie est en contact avec la paroi adjacente du logement. Par conséquent, les points de contact des deux surfaces de guidage ne sont pas alignés avec l'axe de révolution de la douille. De ce fait, lorsque la surface du logement est inclinée pour déplacer l'élément décoratif mobile, un couple se crée autour de cet axe de révolution.

Par contre, il est extrêment surprenant de constater qu'un très léger bombage des surfaces du logement dans lequel l'élément ou les éléments décoratifs mobiles sont logés permet d'accroître dans une telle mesure l'effet de rotation de ces éléments.

Un autre avantage de cette invention est de permettre de réduire la hauteur totale de l'article de bijouterie, notamment en permettant une réduction de l'épaisseur de la glace, ainsi qu'une réduction éventuelle de la hauteur de la douille.

D'autres particularités et avantages de la présente invention apparaîtront dans la description qui suit, ainsi que dans la figure unique du dessin annexé qui illustre, schématiquement et à titre d'exemple, une forme d'exécution de l'article à élément décoratif mobile, ici représenté par une montre vue en coupe axiale, objet de la présente invention.

La montre illustrée par cette figure comporte un mouvement 1 muni d'un cadran 2, logé dans un boîtier comprenant une carrure 3 fermée, d'une part par un fond 4, et d'autre part par une glace 5. Un joint d'étanchéité 6 est disposé entre le fond 4 et la carrure 3 et un autre joint 7 est disposé entre la glace 5 et la carrure 3. Une tige de remontoir et de mise à l'heure 8, qui, si il s'agit d'une montre à quartz ne sert qu'à la mise à l'heure, traverse la carrure 3 et porte une couronne 9 fixée à son extrémité externe.

Une seconde glace 10 est disposée entre la glace 5 et le cadran 2. Une cale d'écartement 11 maintient une distance déterminée entre cette seconde glace 10 et le cadran 2 pour permettre la rotation des aiguilles indicatrices 12.

Comme on le voit sur la figure, les faces internes respectives 5a et 10a de chaque glace 5 et 10 sont appliquées contre une portée 3a, respectivement 3b de la face interne de la carrure 3, ménageant entre elles un logement 15 de hauteur déterminée. Les faces internes respectives de ces glaces présentent un léger bombage formé par un ou plusieurs rayons de courbures, autour d'un ou de plusieurs centre ou axes de courbure, notamment selon des plans de coupe différents. Les courbures respectives données à ces deux faces internes 5a, 10a sont rigoureusement identiques les unes par rapport aux autres, afin que la hauteur du logement 15 formée entre elles demeure constante.

Des éléments décoratifs mobiles, dans cet exemple des diamants 13 fixés dans des douilles cylindriques 14, sont disposés dans le logement 15. Chaque douille cylindrique 14, dont le fond 14a est bombé, est en contact avec la face supérieure 10a de la seconde glace 10 délimitant le logement 15. Le bord annulaire arrondi 14b de la douille 14 s'étend à un niveau légèrement au-dessus de la face supérieure du diamant 13 pour éviter le contact du diamant 13 et de la glace 5. La hauteur entre le fond bombé 14a et ce bord annulaire 14b est plus faible de quelques centièmes de millimètres, par exemple entre 0,05 et 0,1 mm, de préférence entre 0,07 et 0,1 mm, que la distance séparant les faces internes 5a, 10a des glaces 5 et 10, pour permettre le déplacement en translation et en rotation autour des axes de révolution respectifs des douilles 14 dans le logement 15.

En variante, compte tenu du bombage de la face 10a du logement 15, le fond 14a de la douille 14 pourrait être plat ou très peu bombé, sans annuler l'effet de rotation, mais en le réduisant cependant. Par contre, cette mesure permet de réduire la hauteur de la douille 14 et par conséquent celle du logement 15 et donc celle de la montre.

Pour éviter toute usure consécutive au déplacement des supports 14 dans le logement 15, les surfaces internes 5a, 10a des glaces 5 et 10 doivent être lisses et réalisées en un matériau d'une dureté apte à ne pas se rayer.

Quant aux douilles 14 dans lesquelles les diamants 13 sont montés, elles sont de préférence en un métal précieux, par exemple de l'or, utilisé généralement en joaillerie pour le montage des diamants. On pourrait cependant aussi utiliser d'autres métaux tel que l'acier inoxydable, par exemple.

Dans le cas où, comme dans l'exemple illustré, les deux parois du logement 15 sont formées par des glaces, celles-ci seront de préférence en saphir. Si la glace interne 10, ou une partie de celle-ci, ne recouvre pas le cadran 2, mais par exemple est limitée à une zone annulaire disposée autour du cadran 2, la face bombée 10a n'a pas besoin d'être transparente. Dans ce cas, à la place d'une glace saphir, on peut réaliser la paroi 10 en un autre matériau approprié, par exemple une pierre ou de la céramique.

Comme illustré, les deux faces de la glace externe 5 sont parallèles et bombées, tandis que seule la face supérieure 10a de la glace 10 est bombée. Le fait d'avoir notamment une glace externe 5 bombée confère à celle-ci une plus grande solidité, de sorte que son épaisseur peut être réduite, permettant un gain d'épaisseur correspondant de l'article de joaillerie, ce qui a une importance particulière pour des montres.

Le bombage nécessaire pour obtenir un effet sur la vitesse de rotation des éléments décoratifs mobiles 13, 14 est très faible. Les essais ont montré que l'optimum se situe entre 0,5 et 1 mm de flèche pour une glace de 20 mm de diamètre. Avec une flèche beaucoup plus importante, le déplacement des diamants a tendance à se limiter à la zone périphérique du logement 15.

L'invention n'est évidemment pas limitée aux glaces rondes. Elle peut aussi s'appliquer à des glaces de forme polygonale, par exemple rectangulaires ou carrées. Dans ce cas, le bombage peut avoir plusieurs rayons différents et plusieurs focales. On peut aussi imaginer que la glace soit formée par une portion de cylindre, notamment dans le cas d'une glace rectangulaire. Dans ce cas, la vitesse de rotation des éléments décoratifs mobiles sera plus grande lorsqu'ils se déplaceront transversalement que parallèlement à la génératrice du cylindre.

Le mouvement des éléments décoratifs mobiles 13, 14 dans le logement 15 est purement aléatoire. Plus la vitesse de rotation est élevée, plus le déplacement en translation est lent et inversement. Les éléments décoratifs mobiles 13, 14 peuvent tourner dans un sens ou dans l'autre suivant le sens du couple créé pour initier le mouvement de ces éléments décoratifs. Comme ce sens est tout à fait aléatoire, lorsque le logement contient plusieurs éléments décoratifs mobiles, ceux-ci peuvent tourner à des vitesses différentes dans des sens différents, ce qui crée un effet surprenant et spectaculaire.

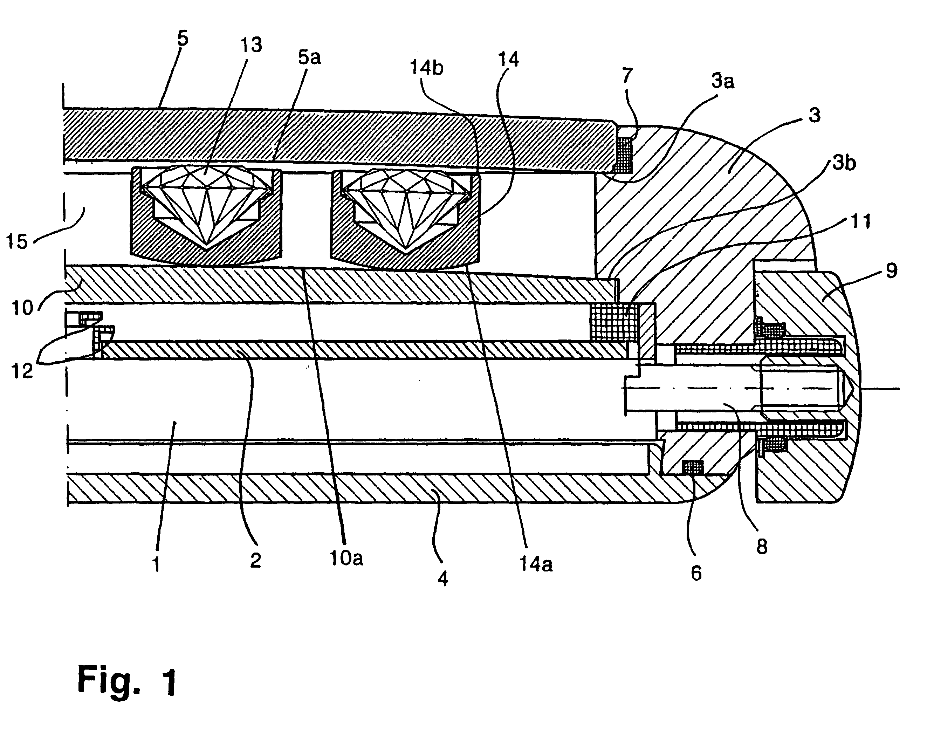

Bien sûr, au lieu de la forme d'éxécution illustrée, où le logement 15 pour les éléments mobiles 13, 14 est superposé au cadran 2, ce logement peut occuper une zone annulaire périphérique autour du cadran, comme illustré dans les Figures 1 et 3 du brevet suisse CH-G-609 517.

Comme on l'a mentionné précédemment, l'invention n'est pas limitée aux montres, mais est applicable à toutes sortes d'articles notamment de joaillerie tels que les bagues et les pendentifs, ainsi qu'à des lunettes, voire les stylos. On pourrait également envisager des articles à éléments décoratifs mobiles selon l'invention, associés à des articles de maroquinerie de luxe, tels que des sacs à main. De manière générale, ces éléments décoratifs mobiles peuvent s'appliquer à tout article utilitaire afin d'y associer un effet esthétique original.

## Revendications

1. Article comportant au moins un élément décoratif mobile contenu à l'intérieur d'un logement (15) délimité par deux parois (5,10) dont les faces internes (5a,10a) sont parallèles l'une à l'autre, l'une (5) au moins de ces parois, visible de l'extérieur, étant transparente, le ou chaque élément décoratif mobile (13,14) comportant un axe de révolution et deux surfaces de guidage (14a,14b) adjacentes respectivement auxdites faces internes et permettant audit élément décoratif mobile (13,14) de se déplacer librement en translation et en rotation autour dudit axe de révolution à l'intérieur dudit logement (15), **caractérisé par le fait que** lesdites faces internes (5a,10a) dudit logement (15) sont bombées selon au moins un rayon de courbure.

2. Article selon la revendication 1, **caractérisé en ce que** lesdites parois (5,10) sont en au moins un matériau présentant une dureté comparable à celle du saphir.

3. Article selon l'une des revendications 1 et 2, **caractérisé par le fait que** les deux faces d'au moins la paroi (5) visible de l'extérieur sont parallèles entre elles.

4. Article selon l'une des revendications 1 à 3, **caractérisé par le fait que** la flèche desdites faces internes bombées (5a,10a) est comprise entre 0,5 et 1 mm pour un rayon de surface de 20 mm.

5. Article selon l'une des revendications 1 à 4,
**caractérisé par le fait que** lesdites faces internes bombées (5a,10a) dudit logement (15) sont des calottes sphériques.

6. Article selon l'une des revendications 1 à 5, **caractérisé par le fait que** lesdites faces internes bombées (5a,10a) dudit logement (15) sont délimitées par des polygones convexes.

7. Article selon la revendication 6, **caractérisé par le fait que** lesdites faces internes (5a,10a) dudit logement (15) sont bombées selon plusieurs rayons et plusieurs focales.

8. Article selon l'une des revendications précédentes, **caractérisé par le fait que** ledit élément décoratif mobile est une pierre précieuse, notamment un diamant (13), montée dans une douille (14).

9. Article selon la revendication 8, **caractérisé par le fait que** le fond de ladite douille (14) a une surface convexe.

10. Article selon l'une des revendications 8 et 9, **caractérisé par le fait que** le jeu entre la hauteur de ladite douille (14) et celle dudit logement (15) est de 0,05 à 0,1 mm.

11. Article selon l'une des revendications 8, 9 ou 10, **caractérisé par le fait que** ladite douille (14) est en métal précieux.

12. Article selon l'une des revendications précédentes, constitué par une montre.

13. Article selon l'une des revendications 1 à 11, constitué par un bijou.

14. Article selon l'une des revendications 1 à 11, constitué par une monture de lunettes.

15. Article selon l'une des revendications 1 à 11, associé à un article de maroquinerie.

## Patentansprüche

1. Artikel mit mindestens einem beweglichen dekorativen Element im Inneren einer Aufnahme (15), die durch zwei Wände (5, 10) begrenzt wird, deren Innenflächen (5a, 10a) parallel zueinander verlaufen, wobei mindestens eine (5) dieser Wände, die von außen sichtbar ist, durchsichtig ist und wobei das oder jedes bewegliche dekorative Element (13, 14) eine Drehachse und zwei Führungsflächen (14a, 14b) aufweist, die sich jeweils neben den Innenflächen befinden und dem beweglichen dekorativen Element (13, 14) gestatten, sich frei translatorisch und drehend um die Drehachse im Inneren der Aufnahme (15) zu bewegen, **dadurch gekennzeichnet, dass** die Innenflächen (5a, 10a) der Aufnahme (15) entlang mindestens einem Krümmungsradius gewölbt sind.

2. Artikel nach Anspruch 1, **dadurch gekennzeichnet, dass** die Wände (5, 10) aus mindestens einem Material bestehen, dessen Härte mit der von Saphir vergleichbar ist.

3. Artikel nach Anspruch 1 oder 2, **dadurch gekennzeichnet, dass** sich die beiden Flächen zumindest der von außen sichtbaren Wand (5) parallel zueinander erstrecken.

4. Artikel nach einem der Ansprüche 1 bis 3, **dadurch gekennzeichnet, dass** die Durchbiegung der gewölbten Innenflächen (5a, 10a) zwischen 0,5 und 1 mm für einen Flächenradius von 20 mm liegt.

5. Artikel nach einem der Ansprüche 1 bis 4, **dadurch gekennzeichnet, dass** die gewölbten Innenflächen (5a, 10a) der Aufnahme (15) Kalotten sind.

6. Artikel nach einem der Ansprüche 1 bis 5, **dadurch gekennzeichnet, dass** die gewölbten Innenflächen (5a, 10a) der Aufnahme (15) durch konvexe Polygone begrenzt werden.

7. Artikel nach Anspruch 6, **dadurch gekennzeichnet, dass** die Innenflächen (5a, 10a) der Aufnahme (15) entlang mehreren Radien und mehreren Brennweiten gewölbt sind.

8. Artikel nach einem der vorhergehenden Ansprüche, **dadurch gekennzeichnet, dass** das bewegliche dekorative Element ein Edelstein, insbesondere ein Diamant (13), der in einer Fassung (14) angebracht ist, ist.

9. Artikel nach Anspruch 8, **dadurch gekennzeichnet, dass** der Boden der Fassung (14) eine konvexe Fläche ist.

10. Artikel nach Anspruch 8 oder 9, **dadurch gekennzeichnet, dass** das Spiel zwischen der Höhe der Fassung (14) und der der Aufnahme (15) zwischen 0,05 und 0,1 mm beträgt.

11. Artikel nach einem der Ansprüche 8, 9 oder 10, **dadurch gekennzeichnet, dass** die Fassung (14) aus Edelmetall besteht.

12. Artikel nach einem der vorhergehenden Ansprüche, der aus einer Armbanduhr besteht.

13. Artikel nach einem der Ansprüche 1 bis 11, der aus einem Schmuckstück besteht.

14. Artikel nach einem der Ansprüche 1 bis 11, der aus einem Brillengestell besteht.

15. Artikel nach einem der Ansprüche 1 bis 11, der einem Lederartikel zugeordnet ist.

## Claims

1. Article comprising at least one movable decorative element contained inside a housing (15) delimited by two walls (5, 10) whose internal faces (5a, 10a) are parallel to one another, at least one (5) of these walls, which is visible from the outside, being transparent, the or each movable decorative element (13, 14) comprising an axis'of revolution and two guide surfaces (14a, 14b) that are respectively adjacent to said internal faces and allow said movable decorative element (13, 14) to move freely in translation and in rotation about said axis of revolution inside said housing (15), **characterized in that** said internal faces (5a, 10a) of said housing (15) are domed along at least one radius of curvature.

2. Article according to Claim 1, **characterized in that** said walls (5, 10) are made of at least one material having a hardness similar to that of sapphire.

3. Article according to one of Claims 1 and 2, **characterized in that** the two faces of at least the wall (5) which is visible from the outside are parallel to one another.

4. Article according to one of Claims 1 to 3, **characterized in that** the flexion of said domed internal faces (5a, 10a) is between 0.5 and 1 mm for a surface radius of 20 mm.

5. Article according to one of Claims 1 to 4, **characterized in that** said domed internal faces (5a, 10a) of said housing (15) are spherical caps.

6. Article according to one of Claims 1 to 5, **characterized in that** said domed internal faces (5a, 10a) of said housing (15) are delimited by convex polygons.

7. Article according to Claim 6, **characterized in that** said internal faces (5a, 10a) of said housing (15) are domed along several radii and several focal lines.

8. Article according to one of the preceding claims, **characterized in that** said movable decorative element is a precious stone, particularly a diamond (13), set in a socket.

9. Article according to Claim 8, **characterized in that** the bottom of said socket (14) has a convex surface.

10. Article according to one of Claims 8 and 9, **characterized in that** the clearance between the height of said socket (14) and that of said housing (15) is between 0.05 and 0.1 mm.

11. Article according to one of Claims 8, 9 and 10, **characterized in that** said socket (14) is made of precious metal.

12. Article according to one of the preceding claims, consisting of a watch.

13. Article according to one of Claims 1 to 11, consisting of a jewel.

14. Article according to one of Claims 1 to 11, consisting of a spectacle frame.

15. Article according to one of Claims 1 to 11, consisting of a fine-leatherware item.
